# EUROPÄISCHE PATENTSCHRIFT

(11) **EP 1 479 895 B1**
(45) Veröffentlichungstag und Bekanntmachung des Hinweises auf die Patenterteilung: **12.04.2017**
(21) Anmeldenummer: 04102098.3
(22) Anmeldetag: 13.05.2004
(51) Int. Cl.: F02D 41/12, F02D 41/02, F02P 5/14, F02P 5/15, F02D 37/02

(54) **Verfahren zur Unterdrückung der Schubabschaltung einer Brennkraftmaschine im Schubbetrieb**
Method for suppressing overrun fuel cut-off of an internal combustion engine during overrun mode
Procédé pour supprimer la coupure d'injection en décéleration d'un moteur à combustion interne en régime de décéleration

(30) Priorität: 22.05.2003 DE 10323249
(43) Veröffentlichungstag der Anmeldung: 24.11.2004
(73) Patentinhaber: Volkswagen Aktiengesellschaft, 38440 Wolfsburg (DE)
(72) Erfinder: Zillmer, Michael, 38173 Sickte (DE); Pott, Ekkehard, 38518 Gifhorn (DE)
(74) Vertreter: Zeitler Volpert Kandlbinder Patent- und Rechtsanwälte Partnerschaft mbB

(56) Entgegenhaltungen:
- EP-A- 0 866 219
- EP-A- 0 890 724
- DE-A- 10 110 500
- DE-A- 19 630 944
- US-A- 5 570 575

## Beschreibung

Die Erfindung betrifft ein Verfahren zum Betreiben einer Brennkraftmaschine eines Kraftfahrzeuges, wobei das Abgas in einem Katalysatorsystem nachbehandelt wird und in einem Betriebszustand "Schubphase" der Brennkraftmaschine, bei dem ein angefordertes Motormoment kleiner als ein Schubmoment des Kraftfahrzeuges ist, eine Schubabschaltung unterdrückt und ein Luft-Kraftstoff-Verhältnis (λ) kleiner oder gleich 1,1 gesetzt wird, gemäß dem Oberbegriff des Anspruchs 1.

Zur Nachbehandlung von Abgasen magerlauffähiger Brennkraftmaschinen ist es bekannt, das Abgas über ein in einem Abgaskanal angeordnetes Katalysatorsystem, insbesondere ein NOₓ-Katalysatorsystem, zu leiten. Das NOₓ-Katalysatorsystem umfaßt mindestens einen NOₓ-Speicherkatalysator und üblicherweise einen oder mehrere vorgeschaltete Vorkatalysatoren. Dabei wird die Brennkraftmaschine diskontinuierlich mit magerem und fettem Luft-Kraftstoff-Verhältnis betrieben, wobei im Abgas enthaltene Stickoxide (NOₓ) während der mageren Betriebsphasen mit Lambda größer 1 in den NOₓ-Speicherkatalysator eingelagert werden und in fetten Betriebsphasen mit Lambda kleiner 1 freigesetzt und reduziert werden (NOₓ-Regeneration). Eine Konvertierung anderer Schadstoffe, wie Kohlenmonoxid (CO) und unverbrannter Kohlenwasserstoffe (HC) erfolgt in bekannter Weise an katalytischen 3-Wege-Komponenten des Vor- und/oder des NOₓ-Speicherkatalysators.

Verglichen mit 3-Wege-Katalysatoren sind NOₓ-Speicherkataiysatoren verhältnismäßig temperaturempfindlich. So kann bereits bei stromauf des NOₓ-Speicherkatalysators vorliegenden Abgastemperaturen oberhalb 780°C eine irreversible Schädigung des Katalysatorsystems erfolgen, so daß die Katalysatoraktivität über die Fahrzeuglebensdauer deutlich abnimmt. Dies betrifft sowohl die NOₓ-Speicherung und -Regeneration während der mageren und fetten Betriebsphasen als auch das HC-, CO- und NOₓ-Konvertierungsverhalten bei stöchiometrischen Betriebsphasen (Lambda gleich 1).

Um das Überschreiten einer kritischen Temperaturgrenze zu vermeiden, sind Abgaskühlungsmaßnahmen zum Senken der Abgastemperatur bekannt. Eine weitere bekannte Maßnahme zur Verringerung der Abgastemperatur besteht in einer Anreicherung des Luft-Kraftstoff-Gemisches auf Lambda kleiner 1.

Ein besonderes Problem hinsichtlich der Temperaturbelastung des NOx-Katalysatorsystems stellen im üblichen Fahrbetrieb unvermeidbare Schubphasen dar, die beispielsweise bei Verzögerungen des Fahrzeugs oder auf Gefällestrecken auftreten können, wobei ein vom Fahrer vorgegebenes Fahrerwunschmoment kleiner als ein momentanes Schubmoment des Kraftfahrzeugs ist. Während einer Schubphase wird die Kraftstoffzufuhr üblicherweise unterbrochen und die Brennkraftmaschine nicht gefeuert betrieben (Schubabschaltung). Somit gelangen hohe Sauerstoffkonzentrationen in das Abgas und an das Katalysatorsystem, welches zu Beginn der Schubphase, insbesondere nach einem Hoch- oder Vollastbetrieb, noch hohe HC-Massen enthält. Durch Oxidation und/oder Sinterung der katalytischen Edelmetallbeschichtung bei hohem Grundtemperatumiveau kann die katalytische Aktivität dauerhaft geschädigt werden. Infolge der exothermen Konvertierungsreaktion von HC mit dem Sauerstoff entstehen zudem lokale Temperaturspitzen, welche ebenfalls zu einer Schädigung der katalytischen Aktivität führen können. Dieses Problem ist um so gravierender, je höher die während einer der Schubphase vorausgegangenen Fahrzeugvortriebsphase erreichten Temperaturen des Katalsysatorssystems sind, d.h. insbesondere nach einem Hochlast- oder Vollast-Fahrzeugbetrieb.

Zur Lösung dieses Problems schlägt die DE 101 10 500 A1 ein Verfahren zum Steuern einer Temperatur eines in einem Abgaskanal einer Brennkraftmaschine eines Kraftfahrzeugs angeordneten Katalysatorsystems vor. Hierbei wird in solchen Betriebsphasen, in denen ein vom Fahrer angefordertes Fahrerwunschmoment kleiner als ein Schubmoment des Fahrzeugs ist, eine Schubabschaltung durch Beaufschlagen der Brennkraftmaschine mit einem Luft-Kraftstoff-Verhältnis kleiner oder gleich 1,1 unterdrückt. Während der Schubphase wird das Luft-Kraftstoff Verhältnis beispielsweise in Abhängigkeit von einer gemessenen oder berechneten Temperatur des Abgases und/oder des Katalysatorsystems vorgegeben. Auf diese Weise wird bei einem nur geringen Mehrverbrauch gegenüber der ungefeuerten Schubabschaltung eine hohe Sauerstoffbeaufschlagung des Katalysatorsystems und damit schädigende Temperaturspitzen im Schub unterdrückt. Eine Katalysatorlebensdauer wird dadurch signifikant erhöht. Das Verfahren ist für NOx-Speicherkatalysatoren besonders geeignet, da diese stark temperaturempfindlich sind.

Dokument DE 101 10 500 A1 offenbart daher ein Verfahren zur Temperatursteigerung eines Katalysatorsystems, wobei während einer Schubphase eine Schubabschaltung unterdrückt wird und das Luft-Kraftstoff-Gemisch in Abhängigkeit von einem erkannten Gefälle variiert wird. Dieses Gefälle wird beispielsweise über die Motordrehzahl und einen eingelegten Gang erkannt. Alternativ wird das Gefälle mittels einer theoretischen Soll-Fahrzeuggeschwindigkeit bzw. -beschleunigung erkannt, wobei die Soll-Fahrzeuggeschwindigkeit bzw. -beschleunigung aus das Motormoment näherungsweise beschreibenden Parametern, wie Fahrpedalstellung, eingespritzte Kraftstoffmenge, Luftmassenmessersignal oder Abgaslambda bestimmt wird. Das Luft-Kraftstoff-Gemisch wird somit indirekt in Abhängigkeit von der Motordrehzahl, Fahrpedalstellung, eingespritzte Kraftstoffmenge, Luftmassenmessersignal oder Abgaslambda eingestellt.

Aus der DE 101 60 438 A1 ist ein Verfahren zum Betreiben einer fremdgezündeten Brennkraftmaschine mit direkter Einspritzung bekannt. Während des Motorbetriebs werden die Temperatur eines NOₓ-Speicherkatalysators sowie der Lastzustand der Brennkraftmaschine kontinuierlich oder diskontinuierlich ermittelt, wobei ein maximaler Sollwert für die Temperatur eines NOₓ-Speicherkatalysators vordefiniert wird. Um den Kraftstoffverbrauch und die Abgasqualität auf möglichst einfache Art zu verbessern, ist vorgesehen, daß in lastfreien Betriebszuständen, bei welchen die Temperatur des NOₓ-Speicherkatalysators über dem vordefinierten Sollwert liegt, die Brennkraftmaschine ungedrosselt betrieben und die Kraftstoffzufuhr zum Brennraum unterbrochen wird. Das Wiedereinsetzen nach einem lastfreien Betriebszustand erfolgt ebenfalls ungedrosselt.

Dokument EP 0 866 219 A2 offenbart eine Vorrichtung zum Steuern einer Schubabschaltung für eine Brennkraftmaschine, wobei die Schubabschaltung unterdrückt wird, wenn die Motorbremse einen erheblichen Teil zu einer Verzögerungskraft beiträgt, d.h. bei niedrigen Fahrzeuggeschwindigkeiten. Zusätzlich wird vorgeschlagen, im Falle der Unterdrückung der Schubabschaltung die Menge der Ansaugluft in Abhängigkeit von der Motordrehzahl derart einzustellen, dass Fehlzündungen unterdrückt werden.

Aus der US 5 570 575 ist eine Kraftstoffversorgungseinrichtung für eine Brennkraftmaschine bekannt, die in Schubphasen eine Schubabschaltung ausführt. Diese wird jedoch unterdrückt, wenn die Katalysatortemperatur einen vorbestimmten Wert übersteigt. Stattdessen wird ein fettes Luft-Kraftstoff Gemisch eingestellt, um eine Überhitzung des Katalysators aufgrund übermäßigen Sauerstoffeintrags zu vermeiden. US 5 570 575 lehrt daher lediglich, in Schubphasen bei unterdrückter Schubabschaltung das Luft-Kraftstoff-Gemisch in Abhängigkeit von einer Katalysatortemperatur einzustellen.

Dokument DE 196 30 944 A1 betrifft eine Motor-Kraftstoffzufuhr-Steuervorrichtung, wobei unter vorgegebenen Schubbetriebsbedingungen eine Kraftstoffzufuhr abgeschaltet wird. Wenn die Katalysatortemperatur zu hoch und ferner die Ansaugluftmenge groß ist, wird die Abschaltung der Kraftstoffzufuhr verhindert und stattdessen die Kraftstoffverbrennung unter Fett-Bedingungen durchgeführt, um eine übermäßige Überhitzung des Katalysators zu verhindern. Falls die Kraftstoffzufuhrabschaltbedingung nicht erfüllt ist, wird der normale Steuervorgang für die Kraftstoffeinspritzung ausgeführt. Dies bezieht sich jedoch explizit nur auf die Frage, ob ein Schubbetrieb vorliegt oder nicht. Dieser wird über eine Drosselklappenstellung, eine Schaltstufe und eine Motordrehzahl erkannt. Falls ein Schubbetrieb vorliegt, wird entweder die Kraftstoffabschaltung durchgeführt oder ein fettes Luft-Kraftstoff-Gemisch zugesteuert. Jedoch ist nicht vorgesehen, während der Zusteuerung des fetten Luft-Kraftstoff-Gemisches, dieses in Abhängigkeit von Parametern zu variieren.

Dokument EP 0 890 724 A2 offenbart ein Verfahren zum Betrieb eines Verbrennungsmotors zum Schutz einer Abgasnachbehandlungseinrichtung. Es ist eine Schubabschaltung vorgesehen, durch die der Verbrennungsmotor bei Vorliegen eines Schiebebetriebszustandes ohne Kraftstoffeinspritzung betrieben werden kann, wobei oberhalb einer vorgegebenen Grenztemperatur im Schiebebetriebszustand die Abschaltung der Kraftstoffeinspritzung unterdrückt und der Verbrennungsmotor statt dessen stöchiometrisch oder fett betrieben wird. Hierbei soll der Problematik begegnet werden, dass das Abschalten bzw. Wiedereinschalten der Kraftstoffzufuhr am Anfang bzw. am Ende einer Schubabschaltung nicht innerhalb eines Arbeitstaktes des Verbrennungsmotors erfolgen kann. Dies kann dazu führen, dass bei Einleitung oder Aufhebung der Schubabschaltung während einiger Arbeitstakte eine so geringe Kraftstoffmenge in die Motorzylinder gelangt, dass eine Verbrennung innerhalb des Motors nicht mehr stattfinden kann. Der unverbrannte Kraftstoff gelangt dann in die Abgasnachbehandlungsanordnung. Dort findet eine Nachverbrennung statt, die zeitlich und örtlich stark begrenzt ist. Daher kann dies zu einer lokalen Überhitzung der aktiven Substanzen der Abgasnachbehandlungsanordnung führen, auch wenn die Durchschnittstemperatur der Abgasnachbehandlungsanordnung noch unterhalb der Zerstörungsgrenze liegt. Dies soll dadurch verhindert werden, dass eine Schubabschaltung nicht mehr erlaubt wird, wenn die Temperatur der Abgasnachbehandlungsanordnung einen vorbestimmten Grenzwert überschreitet. EP 0 890 724 A2 lehrt daher explizit lediglich während Schubphasen, die Schubabschaltung ggf. zu unterdrücken. Eine Variation des Luft-Kraftstoff-Gemisches während der Schubphase mit unterdrückter Schubabschaltung ist nicht offenbart.

Der Erfindung liegt die Aufgabe zugrunde, ein Verfahren der o.g. Art zur Verfügung zu stellen, welches schädigende Oxidationsvorgänge und/oder Temperaturspitzen in Schubphasen, insbesondere nach einem Hoch- oder Vollastbetrieb der Brennkraftmaschine, wirksam und auf einfache Weise vermeidet.

Diese Aufgabe wird erfindungsgemäß durch ein Verfahren der o.g. Art mit den in Anspruch 1 gekennzeichneten Merkmalen gelöst. Vorteilhafte Ausgestaltungen der Erfindung sind in den abhängigen Ansprüchen angegeben.

Dazu ist es bei einem Verfahren der o.g. Art erfindungsgemäß vorgesehen, dass während der Schubphase bei unterdrückter Schubabschaltung das Luft-Kraftstoff-Verhältnis (λ) in Abhängigkeit von einem Abgas-Massenstrom konstant oder variierend eingestellt wird.

Dies hat den Vorteil, dass die Steuerung bzw. Regelung des Luft-Kraftstoff-Verhältnisses in Abhängigkeit von einfach und vergleichsweise genau erfassbaren Größen erfolgt. Es wird eine Vereinfachung des Verfahrens der Unterdrückung der Schubabschaltung durch Koppelung des vorgegebenen Luft-Kraftstoff-Verhältnisses an geeignete Motorbetriebsparameter erreicht.

Zweckmäßigerweise erfolgt die Unterdrückung der Schubabschaltung nur dann, wenn eine Temperatur des Abgases und/oder zumindest einer Stelle des Katalysatorsystems einen vorbestimmten Wert übersteigt.

Ein Problem kann sich daraus ergeben, dass durch die Feuerung der Schubphasen stets ein gewisses Nutzmoment erzeugt wird, wodurch etwa eine vom Fahrer erwartete Geschwindigkeitsreduzierung in einer Schubphase geringer ausfällt als erwartet. Dieses Problem kann durch eine weitere Weiterbildung des erfindungsgemäßen Verfahrens abgeschwächt werden, indem ein in der Schubphase erzeugtes Nutzmoment durch Verschieben eines Zündzeitpunktes in Richtung "spät" und somit Verminderung des Motorwirkungsgrades zumindest teilweise kompensiert wird.

Das zuvor erwähnte Nutzmoment ist besonders auf Gefällestrecken unerwünscht, da hier eine erwartete Verzögerung des Kraftfahrzeugs noch zusätzlich vermindert ist. Daher ist in einer bevorzugten Ausführungsform vorgesehen, dass in einer Schubphase die Unterdrückung der Schubabschaltung aufgehoben wird, wenn das erkannte Gefälle einen vorbestimmten Grenzwert überschreitet.

Beispielsweise wird das Luft-Kraftstoff-Verhältnis (λ) kleiner oder gleich 1,05, 1,02, 1,0, 0,95 oder 0,90 gewählt.

Weitere Merkmale, Vorteile und vorteilhafte Ausgestaltungen der Erfindung ergeben sich aus den abhängigen Ansprüchen, sowie aus der nachstehenden Beschreibung der Erfindung.

In einer Betriebsphase des Kraftfahrzeugs mit Brennkraftmaschine während einer Verzögerungsphase kann es dazu kommen, dass das vom Fahrer mittels des Fahrpedals angeforderte Fahrerwunschmoment kleiner ist, als ein vom Kraftfahrzeug erbrachtes Schubmoment. In diesem Fall befindet sich die Brennkraftmaschine in einer Schubphase. Zuvor befindet sich die Brennkraftmaschine beispielsweise in einem Hochlastbetrieb, bei dem eine verhältnismäßig starke Gemischanreicherung mit Lambda kleiner 1 erfolgte. Während der Schubphase, in welcher der Motor keine Arbeit verrichtet und die Fahrzeuggeschwindigkeit v allein durch das Schubmoment aufrechterhalten wird, erfolgt üblicherweise eine Schubabschaltung, indem eine Kraftstoffzufuhr unterbrochen wird. Infolgedessen nimmt das Luft-Kraftstoff-Verhältnis Lambda einen zumindest nahezu unendlich positiven Wert an. Wegen der aufgrund der Schubabschaltung hohen Sauerstoffkonzentration des Abgases kommt es zu intensiven Oxidationsvorgängen und Konvertierungsreaktionen von zunächst noch hohen HC-Mengen an entsprechenden Katalysatoren eines Katalysatorsystems der Brennkraftmaschine. Nach anfänglich konstanter Katalysatortemperatur T im Hochlastbetrieb tritt eine intensive Temperaturspitze zu Beginn der ungefeuerten Schubphase auf. In Abhängigkeit von der vor der Schubabschaltung vorliegenden Ausgangstemperatur kann diese dabei einen kritischen Temperaturbereich erreichen, in welchem es ggf. zu einer irreversiblen Schädigung des Katalysators kommt.

Um Temperaturspitzen in Schubphasen und unerwünschte Oxidationen/Sinterungen von Edelmetallen wirkungsvoll zu vermeiden, wird die Schubabschaltung in Schubphasen unter bestimmten Voraussetzungen unterdrückt, indem die Brennkraftmaschine während der Schubphase gefeuert betrieben wird. Während der Schubphase wird ein konstanter Lambdawert, der vorzugsweise zwischen λ=0,90 und λ=1,00 liegt, eingeregelt. Während der Schubphase wird die Brennkraftmaschine demnach mit einem stöchiometrischen Luft-Kraftstoff-Verhältnis oder einem geringen Kraftstoffüberschuss betrieben, so dass der vorhandene Sauerstoff beim Verbrennungsvorgang weitgehend verbraucht wird. Durch die entsprechende Wahl des Lambdawertes kann bei unterdrückter Schubabschaltung, insbesondere bei späten Zündwinkeln, das Überschreiten zulässiger Temperaturen des/der Katalysator(en) bzw. auch vorgeschalteter Katalysatoren verhindert werden. Das Fehlen von ausgeprägten Temperaturspitzen und/oder die Unterdrückung unerwünschter Oxidationsvorgänge erlaubt eine signifikante Verlängerung der Lebensdauer des Katalysatorsystems und die Gewährleistung einer ausreichenden katalytischen Aktivität über die Lebensdauer. Allerdings verursacht die Feuerung der Schubphase einen gewissen Kraftstoffmehrverbrauch gegenüber der Zulassung der Schubabschaltung.

Um den Kraftstoffmehrverbrauch zu minimieren ist es daher vorgesehen, die Unterdrückung der Schubabschaltung von der gemessenen oder berechneten aktuellen Temperatur des NOₓ-Speicherkatalysators und/oder des Abgases abhängig zu machen. Dabei wird die Unterdrückung der Schubabschaltung nur zugelassen, wenn die zu Beginn der Schubphase vorliegende Temperatur bereits verhältnismäßig hoch, insbesondere 700°C, vorzugsweise 750°C, ist. Ferner ist es erfindungsgemäß vorgesehen, dass die Sollwertvorgabe für den Lambdawert während der Unterdrückung der Schubabschaltung in Abhängigkeit von einem Abgas-Massenstrom, einem Saugrohrdruck, einem Zündwinkel, Einlassventilsteuerzeiten, Auslassventilsteuerzeiten und/oder einer Stellung einer Ladungsbewegungsklappe gewählt wird. Beispielsweise wird der Sollwert für Lambda proportional zu diesen Parametern eingestellt und während der Unterdrückung der Schubabschaltung wahlweise konstant gehalten oder kontinuierlich in Abhängigkeit von den zuvor genannten Parametern verändert.

Bei einer Weiterbildung der Erfindung ist es zusätzlich zur Unterdrückung der Schubabschaltung vorgesehen, dass während des Hochlastbetriebs (Nichtschubbetrieb) die maximal zulässige Temperaturvorgabe um 10K bis 50K, insbesondere 25K bis 35K, gegenüber dem vorausgegangenen Beispiel erhöht wird. Ausgehend von einer üblich zugelassenen Abgastemperatur vor NOₓ-Speicherkatalysator von etwa 780°C entspricht dies einer Abgastemperatur vor einem Vorkatalysator von 860°C bis 1.000°C. Die Anhebung der zulässigen Katalysatortemperatur führt zu einem insgesamt angehobenen Temperaturniveau. Dennoch wird wegen der weitgehend unterdrückten Temperaturspitze in der Schubphase der kritische Temperaturbereich nicht erreicht und das Katalysatorsystem nicht wesentlich stärker temperaturbelastet. Zudem werden die unerwünschten Oxidationsvorgänge bei hohen Temperaturen unterdrückt. Vorteil dieser Ausführung ist der sich infolge der Temperaturmaßgabe einstellende höhere Lambdawert und somit eine Kompensation oder sogar Überkompensation des durch den gefeuerten Schubbetrieb verursachten Kraftstoffmehrverbrauchs.

Statt eines konstanten Sollwertes für Lambda während der Unterdrückung der Schubabschaltung in der Schubphase kann auch, wie bereits erwähnt, eine kontinuierliche Anpassung des Lambdawertes in Abhängigkeit von einem Abgas-Massenstrom, einem Saugrohrdruck, einem Zündwinkel, Einlassventilsteuerzeiten, Auslassventilsteuerzeiten und/oder einer Stellung einer Ladungsbewegungsklappe vorgesehen sein.

Eine weitere bevorzugte Weiterbildung der Erfindung betrifft eine Gefälleerkennung. Hierbei ist vorgesehen, eine Abweichung Δv einer berechneten Soll-Fahrzeuggeschwindigkeit und/oder -beschleunigung in der Ebene von einer aktuellen Ist- Fahrzeuggeschwindigkeit und/oder -beschleunigung zu ermitteln. Die Unterdrückung der Schubabschaltung wird aufgehoben, d.h. die Schubabschaltung zugelassen, wenn ein anhand der Abweichung der aktuellen Fahrzeuggeschwindigkeit und/oder -beschleunigung von der Soll-Fahrzeuggeschwindigkeit und/oder -beschleunigung erkanntes Gefälle einen vorbestimmten Grenzwert überschreitet. Auf diese Weise wird ein übermäßig langer Bremsweg bei starken Gefällen vermieden. Ist umgekehrt die Ist-Fahrzeuggeschwindigkeit und/oder -beschleunigung niedriger als die Soll-Fahrzeuggeschwindigkeit und/oder -beschleunigung in der Ebene, so liegt eine Steigungsstrecke vor und die Unterdrückung der Schubabschaltung ist zulässig. Es kann zusätzlich vorgesehen sein, dass das Luft-Kraftstoff Verhältnis während der gefeuerten Schubphase mit zunehmendem Gefälle kontinuierlich zunächst bis zu einem Lambda gleich 1 angehoben wird. Gleichzeitig wird der Zündzeitpunkt bis zu einem Kurbelwinkel nach dem oberen Totpunkt (OT) verschoben, um einen Wirkungsgrad der Verbrennung und somit das entstehende Nutzmoment zu verringern. Bei Überschreiten eines vorbestimmten, kritischen Gefälles wird die Schubabschaltung zugelassen.

## Patentansprüche

1. Verfahren zum Betreiben einer Brennkraftmaschine eines Kraftfahrzeuges, wobei das Abgas in einem Katalysatorsystem nachbehandelt wird und in einem Betriebszustand "Schubphase" der Brennkraftmaschine, bei dem ein angefordertes Motormoment kleiner als ein Schubmoment des Kraftfahrzeuges ist, eine Schubabschaltung unterdrückt und ein Luft-Kraftstoff-Verhältnis (λ) kleiner oder gleich 1,1 gesetzt wird,
**dadurch gekennzeichnet,**
**dass** während der Schubphase bei unterdrückter Schubabschaltung das Luft-Kraftstoff-Verhältnis (λ) in Abhängigkeit von einem Abgas-Massenstrom eingestellt wird.

2. Verfahren nach Anspruch 1, **dadurch gekennzeichnet, dass** die Unterdrückung der Schubabschaltung nur dann erfolgt, wenn eine Temperatur des Abgases und/oder zumindest einer Stelle des Katalysatorsystems einen vorbestimmten Wert übersteigt.

3. Verfahren nach wenigstens einem der vorhergehenden Ansprüche, **dadurch gekennzeichnet, dass** ein durch die Unterdrückung der Schubabschaltung in der Schubphase erzeugtes Nutzmoment durch eine Spätverschiebung eines Zündzeitpunktes wenigstens teilweise kompensiert wird.

4. Verfahren nach wenigstens einem der vorhergehenden Ansprüche, **dadurch gekennzeichnet, dass** in einer Schubphase die Unterdrückung der Schubabschaltung aufgehoben wird, wenn das erkannte Gefälle einen vorbestimmten Grenzwert überschreitet.

5. Verfahren nach wenigstens einem der vorhergehenden Ansprüche, **dadurch gekennzeichnet, dass** das Luft-Kraftstoff-Verhältnis (λ) kleiner oder gleich 1,05, 1,02, 1,0, 0,95 oder 0,90 gewählt wird.

6. Verfahren nach wenigstens einem der vorhergehenden Ansprüche, **dadurch gekennzeichnet, dass** während der Schubphase bei unterdrückter Schubabschaltung das Luft-Kraftstoff-Verhältnis (λ) zusätzlich in Abhängigkeit von einem Saugrohrdruck eingestellt wird.

7. Verfahren nach wenigstens einem der vorhergehenden Ansprüche, **dadurch gekennzeichnet, dass** während der Schubphase bei unterdrückter Schubabschaltung das Luft-Kraftstoff-Verhältnis (A) zusätzlich in Abhängigkeit von einem Zündwinkel eingestellt wird.

8. Verfahren nach wenigstens einem der vorhergehenden Ansprüche, **dadurch gekennzeichnet, dass** während der Schubphase bei unterdrückter Schubabschaltung das Luft-Kraftstoff-Verhältnis (λ) zusätzlich in Abhängigkeit von Einlassventilsteuerzeiten eingestellt wird.

9. Verfahren nach wenigstens einem der vorhergehenden Ansprüche, **dadurch gekennzeichnet, dass** während der Schubphase bei unterdrückter Schubabschaltung das Luft-Kraftstoff-Verhältnis (λ) zusätzlich in Abhängigkeit von Auslassventilsteuerzeiten eingestellt wird.

10. Verfahren nach wenigstens einem der vorhergehenden Ansprüche, **dadurch gekennzeichnet, dass** während der Schubphase bei unterdrückter Schubabschaltung das Luft-Kraftstoff-Verhältnis (λ) zusätzlich in Abhängigkeit von einer Stellung einer Ladungsbewegungsklappe eingestellt wird.

## Claims

1. Method for operating an internal combustion engine of a motor vehicle, wherein the exhaust gas is after-treated in a catalytic converter system, and in an "overrun phase" of the internal combustion engine operating state, in which a required engine torque is less than a thrust torque of the motor vehicle, an overrun cutoff is suppressed and an air/fuel ratio (λ) is set to less than or equal to 1.1,
**characterized**
**in that** during the overrun phase with the overrun cutoff suppressed the air/fuel ratio (A) is set as a function of an exhaust gas mass flow.

2. Method according to Claim 1, **characterized in that** the suppression of the overrun cutoff takes place only if a temperature of the exhaust gas and/or at least one location on the catalytic converter system exceeds a predetermined value.

3. Method according to at least one of the preceding claims, **characterized in that** a useful torque which is generated by the suppression of the overrun cutoff in the overrun phase is at least partially compensated by shifting an ignition time to retarded ignition.

4. Method according to at least one of the preceding claims, **characterized in that** in an overrun phase the suppression of the overrun cutoff is cancelled if the detected gradient exceeds a predetermined limiting value.

5. Method according to at least one of the preceding claims, **characterized in that** the air/fuel ratio (λ) is selected to be less than or equal to 1.05, 1.02, 1.0, 0.95 or 0.90.

6. Method according to at least one of the preceding claims, **characterized in that** during the overrun phase with the overrun cutoff suppressed the air/fuel ratio (λ) is additionally set as a function of an intake manifold pressure.

7. Method according to at least one of the preceding claims, **characterized in that** during the overrun phase with suppressed overrun cutoff the air/fuel ratio (λ) is additionally set as a function of an ignition angle.

8. Method according to at least one of the preceding claims, **characterized in that** during the overrun phase with suppressed overrun cutoff the air/fuel ratio (λ) is additionally set as a function of inlet valve control times.

9. Method according to at least one of the preceding claims, **characterized in that** during the overrun phase with suppressed overrun cutoff the air/fuel ratio (A) is additionally set as a function of outlet valve control times.

10. Method according to at least one of the preceding claims, **characterized in that** during the overrun phase with suppressed overrun cutoff the air/fuel ratio (A) is additionally set as a function of a position of a charge movement valve.

## Revendications

1. Procédé de fonctionnement d'un moteur à combustion interne de véhicule automobile, le gaz d'échappement étant post-traité dans un système de catalyseur et une coupure d'injection en décélération étant supprimée et un rapport air-carburant (λ) inférieur ou égal 1,1 étant utilisé dans un état de fonctionnement de « phase de décélération » du moteur à combustion interne dans lequel un couple moteur demandé est inférieur à un couple de décélération du véhicule automobile, **caractérisé en ce que** pendant la phase de décélération, lorsque la coupure d'injection en décélération est supprimée, le rapport air-carburant (λ) est réglé en fonction d'un débit massique de gaz d'échappement.

2. Procédé selon la revendication 1, **caractérisé en ce que** la suppression de la coupure d'injection en décélération ne se produit que lorsqu'une température du gaz d'échappement et/ou d'au moins un point du système de catalyseur dépasse une valeur prédéterminée.

3. Procédé selon au moins l'une quelconque des revendications précédentes, **caractérisé en ce qu'**un couple utile produit par la suppression de la coupure d'injection en décélération dans la phase de décélération est au moins en partie compensé par un retardement d'un moment d'allumage.

4. Procédé selon au moins l'une quelconque des revendications précédentes, **caractérisé en ce que** dans une phase de décélération, la suppression de la coupure d'injection en décélération est levée lorsque la pente détectée dépasse une valeur limite prédéterminée.

5. Procédé selon au moins l'une quelconque des revendications précédentes, **caractérisé en ce que** le rapport air-carburant (λ) est sélectionné de façon à être inférieur ou égal à 1,05, 1,02, 1,0, 0,95 ou 0,90.

6. Procédé selon au moins l'une quelconque des revendications précédentes, **caractérisé en ce que** pendant la phase de décélération, lorsque la coupure d'injection en décélération est supprimée, le rapport air-carburant (λ) est réglé en outre en fonction d'une pression de tube d'aspiration.

7. Procédé selon au moins l'une quelconque des revendications précédentes, **caractérisé en ce que** pendant la phase de décélération, lorsque la coupure d'injection en décélération est supprimée, le rapport air-carburant (λ) est en outre réglé en fonction d'un angle d'allumage.

8. Procédé selon au moins l'une quelconque des revendications précédentes, **caractérisé en ce que** pendant la phase de décélération, lorsque la coupure d'injection en décélération est supprimée, le rapport air-carburant (λ) est en outre réglé en fonction des temps de commande de soupape d'admission.

9. Procédé selon au moins l'une quelconque des revendications précédentes, **caractérisé en ce que** pendant la phase de décélération, lorsque la coupure d'injection en décélération est supprimée, le rapport air-carburant (λ) est en outre réglé en fonction des temps de commande de soupape d'échappement.

10. Procédé selon au moins l'une quelconque des revendications précédentes, **caractérisé en ce que** pendant la phase de décélération, lorsque la coupure d'injection en décélération est supprimée, le rapport air-carburant (λ) est en outre réglé en fonction d'une position d'un clapet de déplacement de charge.
